# EUROPEAN PATENT APPLICATION

(11) **EP 2 236 942 A1**
(43) Date of publication of application: **06.10.2010**
(21) Application number: 10405035.6
(22) Date of filing: 26.02.2010
(51) Int. Cl.: F24C 15/32

(54) **Steam oven for aircraft including safety valve for water leakage prevention purposes**

(30) Priority: 09.03.2009 JP 2009054789
(71) Applicant: JAMCO CORPORATION, Mitaka, Tokyo (JP)
(72) Inventor: Yasuhara, Koji, Tokyo (JP)
(74) Representative: Moinas, Michel

(57) **Abstract**

The safety valve is provided on the upstream or downstream side of the regulating valve provided in the water supply passage for supplying water to the steam generator. The safety valve does not completely close the regulating valve while the regulating valve is normally opened and closed by a predetermined drive signal. When the regulating valve is completely opened due to abnormality, the safety valve gradually closes the regulating valve by virtue of a water flow and maintains the complete closing of the water supply passage after a lapse of a predetermined time. According to this constitution, the steam oven comprises a mechanism that singularly automatically stops jetting of water without depending on electrical control.

## Description

### Field of the Invention

The present invention relates to steam ovens. More specifically, the present invention relates to a steam oven for an aircraft used for heating and humidifying an in-flight meal to provide the in-flight meal.

### Description of the Related Art

In a typical steam oven for an aircraft, water dropped into a cook chamber is brought into a mist state by a blower, and thereafter, the mist is heated due to high temperature of a heater in the cook chamber, whereby steam is generated.

Since the pressure in a cook chamber is relatively high, water should be forcibly supplied by a pump provided in an aircraft body. In order to control the amount of steam generated in the cook chamber, a temperature sensor is provided in the cook chamber. When the measured temperature in the cook chamber is lowered to not more than a predetermined temperature, the water supply amount is increased by a regulating valve to increase the amount of steam. On the contrary, when the measured temperature is increased to not less than the predetermined temperature, the water supply amount is decreased to decrease the amount of steam.

This type of steam oven is disclosed in US patent No. 5,209,941 and Japanese Patent Application Laid-Open No. 2003-227612.

Recently, in such a steam oven, in order to realize highly accurate heating and humidification, the regulating valve is driven to be opened and closed by a drive signal from an electronic controller, and the drive signal, that is, the frequency of the opening operations is feedback-controlled based on a detected value of a temperature sensor provided near an outlet of a steam discharge hole so that a predetermined steam temperature is obtained.

However, when the regulating valve is firmly fixed by water stain, or when the regulating valve is in a full-opened state due to abnormality of a control system, such as runaway of a drive mechanism, a power supply system, or a CPU, a water supply pipe maintains the opened state, and therefore, pressurized water keeps jetting into the cook chamber. When a crewman opens a door of the steam oven without knowing that, the water flows outside the steam oven at one time. To make matters worse, if a flight attendant panics, closing of the main water supply valve is delayed, and a kitchen in the aircraft may be flooded with water. At worst, an electrical system of the aircraft is shortcircuited and may lead to serious accidents.

Thus, it is examined that the regulating valve or the control system is doubled, or generation of a continuous water flow in the water supply pipe is electrically detected, and a water supply passage is closed by a separately provided solenoid safety valve. However, this constitution leads to increase in cost, and, at the same time, even if the electrically operating safety apparatus is provided, power failures may include an anomalous occurrence similar to the regulating valve. On the other hand, when the safety vale is completely closed by malfunction, even if the regulating valve operates normally, the water supply passage is completely closed, whereby there occurs such a disadvantage that in-flight meals cannot be heated.

Manufacturers of aircrafts are concerned about possible serious accidents and have an uneasy sense that the electrically operating safety apparatus cannot reliably prevent the anomalous occurrence. Therefore, a steam oven is strongly required to have a mechanism that can reliably stop jetting of water in a short time without depending on electrical circuits even when the regulating valve is completely opened due to abnormality.

An object of the present invention is to provide a steam oven for an aircraft used for heating in-flight meals. The steam oven is developed to response to the requests of the manufacturers of aircrafts and includes a safety valve for water leakage prevention purposes. The safety valve is provided in a water supply pipe of the steam oven and operates when water is continuously supplied for not less than a predetermined time. When a regulating valve for supplying water to a steam generator is firmly fixed by water stain or when the regulating valve is held in a full-opened state by abnormality of a drive mechanism, a power supply system, or a control system, the safety valve automatically and reliably closes the water supply pipe to prevent water from continuously jetting in a kitchen of an aircraft and leading to water flooding.

### SUMMARY OF THE INVENTION

According to a first embodiment of the present invention, a steam oven for heating in-flight meals, which is provided in an aircraft and includes a regulating valve provided in a water supply pipe for supplying water to a water supply nozzle for steam generation provided in a cook chamber, the regulating valve being driven to be opened and closed by a drive signal of an electronic controller, and the amount of steam generation being controlled by adjusting the timing of the opening/closing operation based on the drive signal, the steam oven including a safety valve for water leakage prevention purposes including in the water supply pipe a valve seat having an opening, when the regulating valve is in an opened state, being moved in a direction that closes the opening of the valve seat by a water flow generated in the water supply pipe, and, when the regulating valve is a closed state, being returned in a direction that opens the opening of the valve seat by its own weight or a spring, wherein the opening of the valve seat is completely closed by the safety valve only when the regulating valve continues the opened state for not less than a predetermined time, and thereafter, the closing is maintained by the water pressure on the upstream side to prevent jetting of water.

According to a second embodiment of the present invention, the safety valve is a spherical valve, the semispherical portion on the upstream side of the water supply pipe provides a pressure-receiving surface receiving the water flow in the water supply pipe, and the semispherical portion on the downstream side of the water supply pipe is a closing surface closing the opening of the valve seat through a predetermined interval.

According to a third embodiment of the present invention, the water supply pipe includes an upstream side fixing plate including a water passage hole, a downstream side pressing plate, and a spring connecting these plates, the pressing plate is connected to the fixing plate, fixed to the water supply pipe, through the spring, and only when the regulating valve continues the opened state for not less than a predetermined time, by virtue of the water flow applied to the pressing plate, the pressing plate moves the safety valve against the resorting force of the spring, whereby the opening of the valve seat is closed; thereafter, the closing is maintained by the water pressure on the upstream side to prevent jetting of water.

According to a fourth embodiment of the present invention, a safety valve for water leakage prevention purposes includes a cylindrical portion with the bottom surface facing the upstream side of a water supply pipe and a conical portion integrally formed with the cylindrical portion and facing an opening of a valve seat provided on the downstream side of the water supply pipe of an axis direction guide. The cylindrical portion is provided in the water supply passage and is guided by the guide ensuring a water flow. Only when the regulating valve continues the opened state for not less than a predetermined time, by virtue of the water flow applied to the bottom surface of the cylindrical portion, the opening of the valve seat is closed by the side surface of the conical portion.

According to a fifth embodiment of the present invention, the steam oven according to an aspect of the present invention includes an expansion part, which has an opening of a valve seat and expanding from the opening of the valve seat toward the upstream side of a water supply pipe. A safety valve for water leakage prevention purposes is stored in the expansion part.

According to a sixth embodiment of the present invention, at least a self-lubricating resin is applied onto a surface of a contact part between a safety valve for water leakage prevention purposes and an opening of a valve seat.

According to the first embodiment of the present invention, in a steam oven for an aircraft used for heating in-flight meals, a regulating valve provided in a water supply passage for supplying water to a water supply nozzle for steam generation provided in a cook chamber is driven to be opened and closed by a drive signal of an electronic controller, and the opening and closing timing based on the drive signal, that is, the frequency of the opening operation of the regulating valve is adjusted, whereby a steam generation amount is controlled. The steam oven includes a safety valve for water leakage prevention purposes including a valve seat which is provided in the water supply pipe and has an opening. When the regulating valve is in an opened state, the safety valve is moved in a direction that closes the valve seat by a water flow generated in the water supply pipe. When the regulating valve is in a closed state, the safety valve is returned in the direction that opens the opening of the valve seat by its own weight or a spring. The opening of the valve seat is completely closed by the safety valve only when the regulating valve continues the opened state for not less than a predetermined time. The closed state is maintained by the water pressure on the upstream side, whereby if the regulating valve is firmly fixed by water stain or if the regulating valve maintains the complete opening beyond the normal range due to abnormality of a power supply or an electronic controller, by virtue of the water flow applied to the safety valve, the safety valve is moved toward the valve seat against its own weight or the reinforcing force of a spring. The straight portion of the spring is stored on the downstream side of the valve seat of the water supply pipe, and the seat valve is closed by the safety valve, whereby jetting of water can be reliably prevented.

According to the second embodiment of the present invention, the safety valve for water leakage prevention purposes is a spherical valve, and the semispherical portion on the upstream side of the water supply passage provides a pressure-receiving surface receiving the water flow in the water supply passage, and the semispherical portion on the downstream side of the water supply passage is a closing surface closing the opening of the valve seat through a predetermined interval. This constitution can realize the invention according to claim 1 with a simpler structure and at low cost.

According to the third embodiment of the present invention, the water supply pipe includes an upstream side fixing plate including a water passage hole, a downstream side pressing plate, and a spring connecting these plates. The pressing plate is connected to the fixing plate, fixed to the water supply pipe, through the spring. Only when the regulating valve continues the opened state for not less than a predetermined time, by virtue of the water flow applied to the pressing plate, the pressing plate moves the safety valve against the resorting force of the spring, whereby the opening of the valve seat is closed. Thereafter, the closing is maintained by the water pressure on the upstream side to prevent jetting of water, and consequently, the safety valve can be provided in a horizontal direction.

According to the fourth embodiment of the present invention, the safety valve includes a cylindrical portion with the bottom surface facing the upstream side of the water supply pipe and a conical portion integrally formed with the cylindrical portion and facing an opening of a valve seat provided on the downstream side of the water supply pipe. The cylindrical portion is guided in the axis direction by a guide provided in a water supply passage and ensuring a water flow. Only when the regulating valve continues the opened state for not less than a predetermined time, by virtue of the water flow applied to the bottom surface of the cylindrical portion, the opening of the valve seat is closed by the side surface of the conical portion. According to this constitution, when the regulating valve is completely opened due to abnormality, the safety valve can be smoothly and accurately operated by the guide. Further, the diameter of the cylindrical portion is selected, and consequently a pressure-receiving surface receiving the water flow can be easily adjusted.

According to the fifth embodiment of the present invention, the steam oven further includes an expansion part having the opening of the valve seat and expanding from the opening of the valve seat toward the upstream side of the water supply pipe. The safety valve is stored in the safety valve. According to this constitution, a sufficient flow path can be ensured around the safety valve, and resistance to the water supply can be minimized.

According to the sixth embodiment of the present invention, at least a self-lubricating resin is applied onto the surface of the contact part between the safety valve and the opening of the valve seat. This constitution can realize reliable operation of the safety valve for a long period of time all the more.

### BRIEF DESCRIPTION OF THE DRAWINGS

FIG. 1 is a view illustrating a steam generator according to an aspect of the present invention;
FIG. 2 is a cross-sectional view of a steam oven according to an aspect of the present invention;
FIG. 3 is a view illustrating a rack used in the steam oven;
FIG. 4 is a rear view of the steam generator;
FIG. 5 is a view illustrating a water supply system according to an aspect of the present invention;
FIG. 6 is a view illustrating an example of a drive signal output to regulating valves 12a and 12b according to an aspect of the present invention;
FIG. 7 is a view illustrating a first embodiment of the present invention;
FIGS. 8A to 8C are views illustrating a second embodiment of the present invention. FIG. 8B is an A-A cross-sectional view of FIG. 8A, and FIG. 8C is a B-B cross-sectional view of FIG. 8A;
FIG. 9 is a view illustrating a third embodiment of the present invention; and
FIG. 10 is a view illustrating a modification of the present invention.

### DETAILED DESCRIPTION OF THE EMBODIMENTS

### (Overall configuration of steam oven)

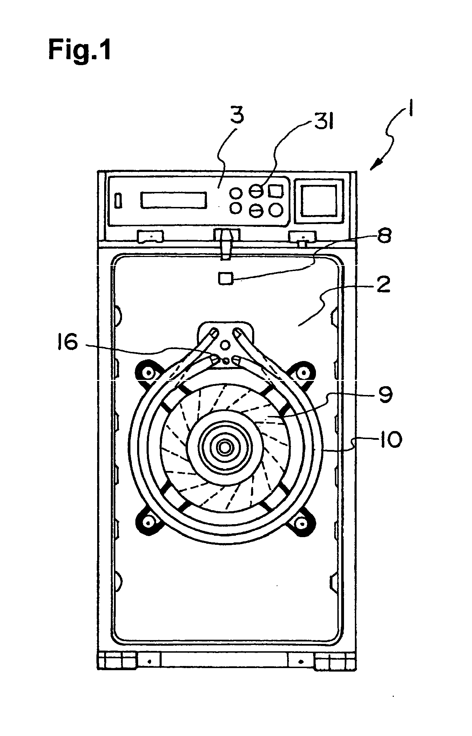

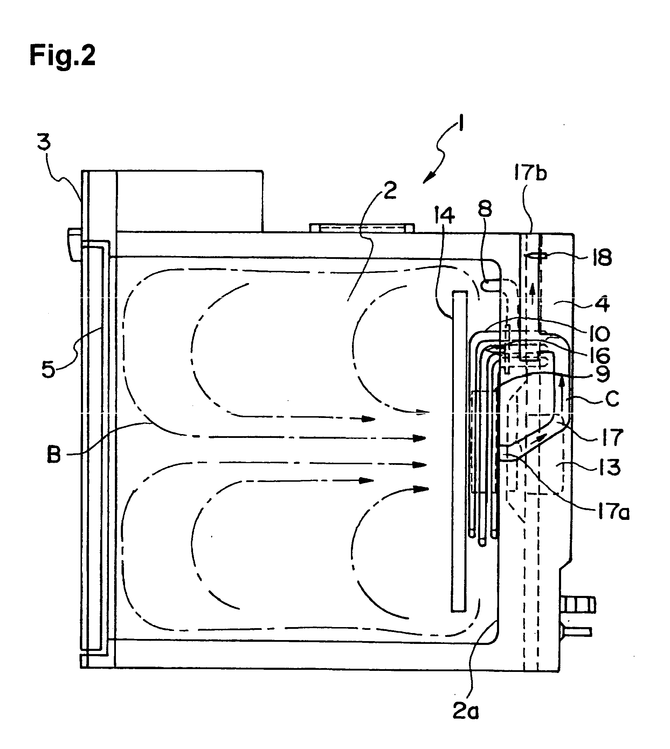

As illustrated in FIGS. 1 and 2, a steam oven 1 according to an aspect of the present invention includes a cook chamber 2 in which foods such as in-flight meals are arranged and a control operation part 3 provided above the cook chamber 2.

The cook chamber 2 has on its back surface an accommodation box 4 for accommodating devices required for cooking food, and especially for heating and humidifying the food. Those devices in the accommodation box 4 are controlled by an electronic controller in the control operation part 3.

The control operation part 3 has on its front surface a large number of switches 31 and so on required for an operator to operate the steam oven 1.

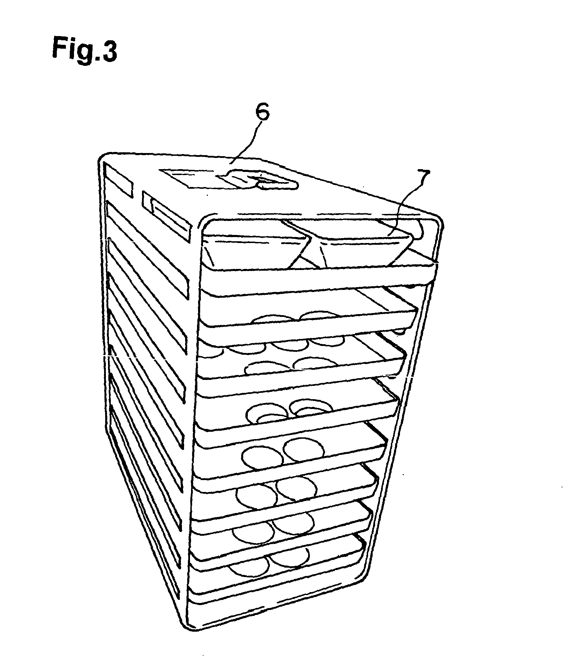

The foods are put on a plurality of stages of a rack 6 illustrated in FIG. 3 through a door 5 provided on the front surface of the cook chamber 2. The rack 6 can be freely inserted in and removed from the cook chamber 2.

A reference numeral 7 of FIG. 3 denotes a casserole.

Each component will be described in more detail with reference to mainly FIGS. 1, 2, and 4.

A steam generator for generating steam in the cook chamber 2 of the steam oven 1 is constituted of a water supply nozzle 8, a fun 9, an oven heater 10, and so on.

As illustrated in FIGS. 1 and 2, the water supply nozzle 8 is provided so as to protrude into the cook chamber 2 through the rear inner wall 2a of the cook chamber 2. The water supply nozzle 8 guides water into the cook chamber 2 from the outside of the cook chamber 2, and although it penetrates through the cook chamber 2, the inside and outside (back surface) of the cook chamber 2 are airtightly separated at the boundary of the cook chamber 2.

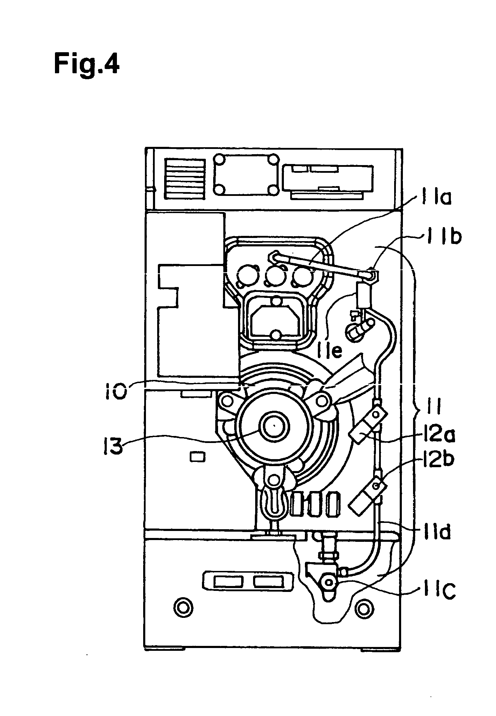

Referring to FIG. 4 illustrating the inside of the accommodation box 4, the rear end of the water supply nozzle 8 is joined to one end of an upper water supply pipe 11a extending somewhat obliquely downward of the water supply pipe 11. The other end of the upper water supply pipe 11a is connected to the upper end of a lower water supply pipe 11d through a joint 11b. The lower water supply pipe 11d is connected to a plug 11c provided below the accommodation box 4.

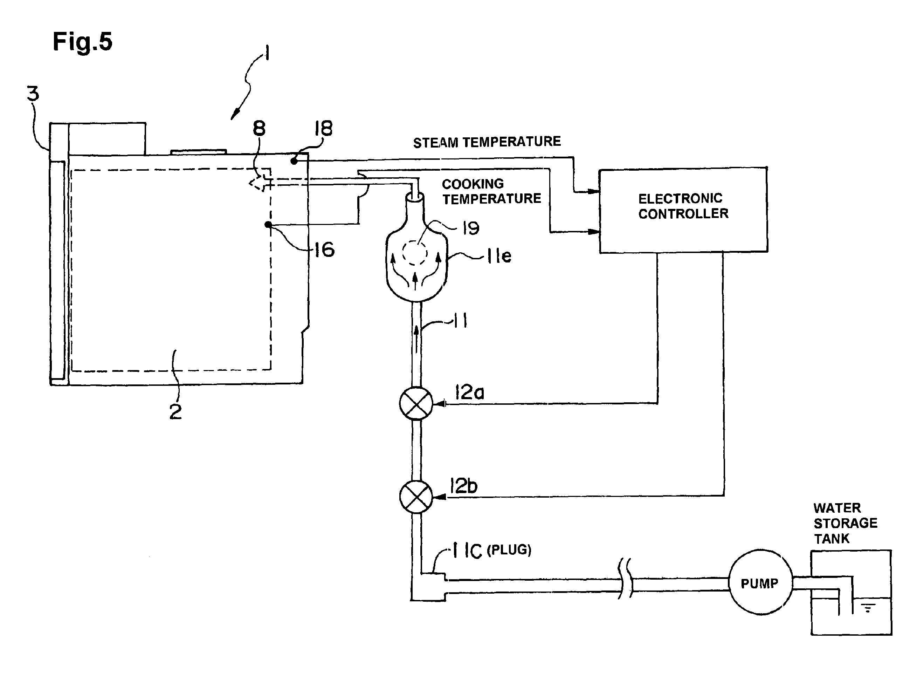

The upper water supply pipe 11a and the lower water supply pipe 11d are pipes with a diameter of approximately 2.5 φ. As illustrated in FIG. 5, the plug 11c is connected to a pump through a pipe. The pump sucks water from a tank provided outside the cook chamber 2 to pressure feed the water. The water pressure fed from the pump is jetted into the cook chamber 2 from the water supply nozzle 8 through the plug 11, the lower water supply pipe 11d, regulating valves 12b and 12a, the joint 11b, and the upper water supply pipe 11a.

As illustrated in FIG. 1, the three delta-connected oven heaters 10 are provided so as to be somewhat separated from the rear inner wall 2a of the cook chamber 2. The oven heaters 10 heat the inside of the cook chamber 2, and, at the same time, change the water, jetted from the water supply nozzle 8 to the oven heaters 10, to steam.

Those oven heaters 10 have such a shape that the water jetted from the water supply nozzle 8 passes through a gap of the end of the oven heater 10 to drop on the lowermost side of the oven heaters 10 or adjacent thereto.

Each end of the oven heaters 10 is connected to an electrical supply source (not shown) provided outside the cook chamber 2 (provided on the back surface of the cook chamber 2) and is provided so as to penetrate through the cook chamber 2. However, since the inside and outside (the back surface) of the cook chamber 2 is airtightly separated at the boundary of the cook chamber 2, the steam in the cook chamber 2 never leaks through the ends of the oven heaters 10.

The annular fan 9 is of a centrifugal type and is provided at substantially the center of the cook chamber 2 so as to be surrounded by the oven heaters 10. The fan 9 is firmly fixed to a motor shaft of a motor 13, penetrating through the cook chamber 2, by a nut at the center.

When the fan 9 is rotated by the operation of the motor 13, air taken from near the center of the fan 9 is jetted around the fan 9 by the action of a large number of blades arranged on the outer periphery of the fan 9. Consequently, heat and steam from the oven heaters 10 disposed so as to surround the fan 9 are diffused in the cook chamber 2.

As illustrated in FIG. 2, the entire front surface of the fan 9 is covered by a baffle plate 14, but air can be taken through a plurality of air intake ports (not shown) provided at the center of the baffle plate 14.

Meanwhile, the air jetted by the fan 9 is blocked by the baffle plate 14, and therefore, as shown in dashed arrows B in FIG. 2, the air is jetted into the cook chamber 2 through a gap between the baffle plate 14 and the upper, lower, left and right inner walls of the cook chamber 2. The air in the cook chamber 2 is stirred by the action of the fan 9, and hot air containing steam circulates around all foods arranged in the cook chamber 2.

A cook chamber temperature sensor 16 is provided in a space between the ends of the oven heater 10 so as to protrude from the rear inner wall 2a. The cook chamber temperature sensor 16 is located at the position where the heat and steam generated by the fan 9 always passes through the cook chamber temperature sensor 16.

An entrance 17a of a steam path 17 is provided between the oven heater 10 and the fan 9 so as to be opened to the inside of the cook chamber 2. As shown in arrows C in FIG. 2, the steam generated in the cook chamber 2 enters the entrance 17a to pass through the steam path 17 extending somewhat obliquely upward and, thus, to be discharged to the outside of the steam oven 1.

The entrance 17a and the steam path 17 are always opened, and the inside of the cook chamber 2 and the outside of the steam oven 1 are always communicated with each other. Thus, the cook chamber 2 is always opened to the outside air.

A steam temperature sensor 18 is provided near a steam outlet 17b of the steam path 17. The steam temperature sensor 18 measures the temperature of the steam discharged from the steam outlet 17b, and a detected value detected by the steam temperature sensor 18 is transmitted to an electronic controller of the control operation part 3 along with a detected value from the cook chamber temperature sensor 16. The electronic controller responses to those detected values to, as described later, adjust a drive signal for driving the regulating valves 12a and 12b, that is, the frequency of the opening operation, and, thus, to regulate the amount of water to be supplied through the water supply nozzle 8 and dropped in the cook chamber 2.

The steam temperature sensor 18 is not necessarily provided near the steam outlet 17b and may be provided at the middle of the steam path 17 and so on. However, the discharged steam becomes most stable near the steam outlet 17b, and therefore, in order to accurately measure the steam temperature, the steam temperature is preferably measured near the steam outlet 17b.

### (First embodiment)

The water supply amount control for steam generation purposes performed by the regulating valves 12a and 12b will be described in detail.

As described above, the pressurized water is supplied through the pump and so on from a water storage tank in the aircraft into the water supply pipe 11. The water is supplied to the water supply nozzle 8 provided in the cook chamber 2 through the water supply pipe 11.

As illustrated in FIG. 5, the regulating valves 12a and 12b are provided on the downstream side of the pump. The regulating valves 12a and 12b are normally closed types of solenoid valves whose opening and closing are controlled by a drive signal from the electronic controller in the control operation part 3. The frequency of the opening operation of the regulating valves 12a and 12b is increased, whereby the supply amount of the water jetted from the water supply nozzle 8 can be increased. Meanwhile, the frequency of the opening operation is reduced, whereby the water supply amount can be reduced.

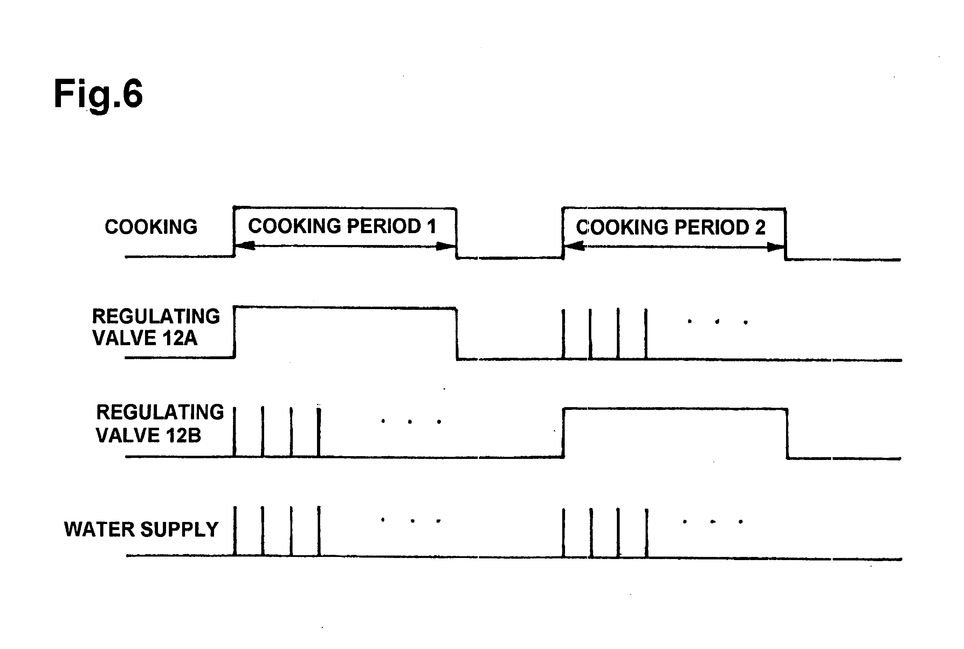

FIG. 6 illustrates an example of the drive signal, output from the electronic controller, for driving the regulating valves 12a and 12b. For a cooking period 1, a full-open signal for maintaining full opening throughout the period is output to the regulating valve 12a, and a drive signal is given to the regulating valve 12b so that the opening operation frequency has a predetermined value.

For a cooking period 2 after the termination of cooking in the cooking period 1, the full-open signal for maintaining full opening throughout the period is output to the regulating valve 12b, and a drive signal is given to the regulating valve 12a so that the opening operation frequency has a predetermined value.

The regulating valves 12a and 12b are alternately switched to be opened and closed, whereby the lives as the solenoid valves can be extended.

When highly accurate heating is not required, the regulating valves 12a and 12b may be controlled so that, when steam is insufficient, the regulating valve 12a or 12b is driven by a constant full-open signal, for example, and when the cook chamber 2 is satisfactorily filled with steam, the regulating valves 12a and 12b are always turned off (closed).

In this embodiment, the two regulating valves are provided in order to extend their lives; however, when a solenoid valve having a long life is used, it is sufficient to provide one regulating valve.

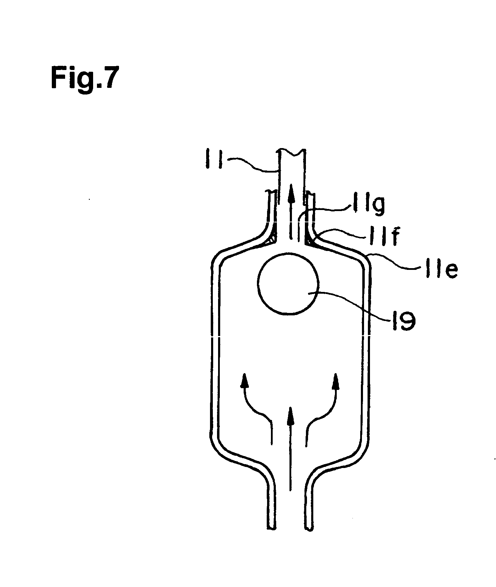

As illustrated in FIG. 5, the water supply pipe 11 includes an expansion part 11e provided at the portion extending in the vertical direction on the downstream side of the joint 11b. The expansion part 11e is located on the downstream side of the regulating valves 12a and 12b. As illustrated in FIG. 7, the expansion part 11e includes a spherical safety valve 19 for water leakage prevention purposes formed of stainless and so on and having a specific gravity larger than water.

When the steam oven 1 is not used, the regulating valves 12a and 12b maintain an always-closed state. Therefore, the water flow is not applied to the safety valve 19, and the safety valve 19 touches the bottom portion of the expansion part 11e by its own weight. An opening 11g (see, FIG. 7) of a valve seat 11f provided at the connecting portion with the joint 11b of the water supply pipe 11 at the upper end of the expansion part 11e is in a full-opened state.

Meanwhile, the heat oven 1 is started to be used, and then in order to generate necessary water steam, the full-open signal is supplied to one of the regulating valves 12a and 12b, and a predetermined drive signal is supplied to the other regulating valve. Consequently, water flows while the regulating valves 12a and 12b are in the full-opened state, and the water jetted from the water supply nozzle 8 connected to the most downstream of the water supply pipe 11 is dropped on the fan 9 to be sprayed against the heater 10 provided at the outer periphery of the fan 9, and, thus, to be instantly turned into steam, whereby the water is supplied into the cook chamber 2 in the form of steam.

At that time, the water flows between the spherical safety valve 19 and the inner wall of the expansion part 11e. Meanwhile, the pressurized water flow from the pump is applied to the semispherical surface on the upstream side of the safety valve 19 (the lower side in FIG. 7). The semispherical surface on the upstream side receives the pressure of the water flow, and the safety valve 19 gradually moves up toward the opening 11g of the valve seat 11f at the upper end of the expansion part 11e.

However, since a close signal is given to the regulating valve 12a or 12b to close the regulating valve again, the water flow applied to the safety valve 19 is stopped, and the safety valve 19 then returns to the bottom portion of the expansion part 11e by its own weight.

The pressure-sensitive characteristics of the spherical safety valve 19 are changed by, for example, the radius (pressure-receiving area) of the safety valve 19, the specific gravity, and a gap between the safety valve 19 and the inner wall of an expansion part 11e. However, those are selected so that, while the regulating valves 12a and 12b are normally operated, the above behavior is repeated, and the opening 11g of the valve seat 11f is not closed. Thus, this constitution does not affect the water supply.

However, the regulating valve 12a or 12b may be firmly fixed by water stain, or, for example, due to the abnormality of the power source or the electronic controller, the turning on (the open signal) continues beyond the normal range, whereby the regulating valves 12a and 12b may maintain the full-opened state. In those cases, the safety valve 19 keeps moving up toward the opening 11g of the valve seat 11f, and the semispherical surface on the downstream side (the upper side in FIG. 7) of the safety valve 19 finally closes the opening 11g. Thereafter, the closed state is maintained by the pressure of the pressurized water applied to the upstream side of the safety valve 19, whereby the jetting of water due to the full-opening abnormality of the regulating valve 12a or 12b can be reliably prevented after a predetermined time.

### (Second embodiment)

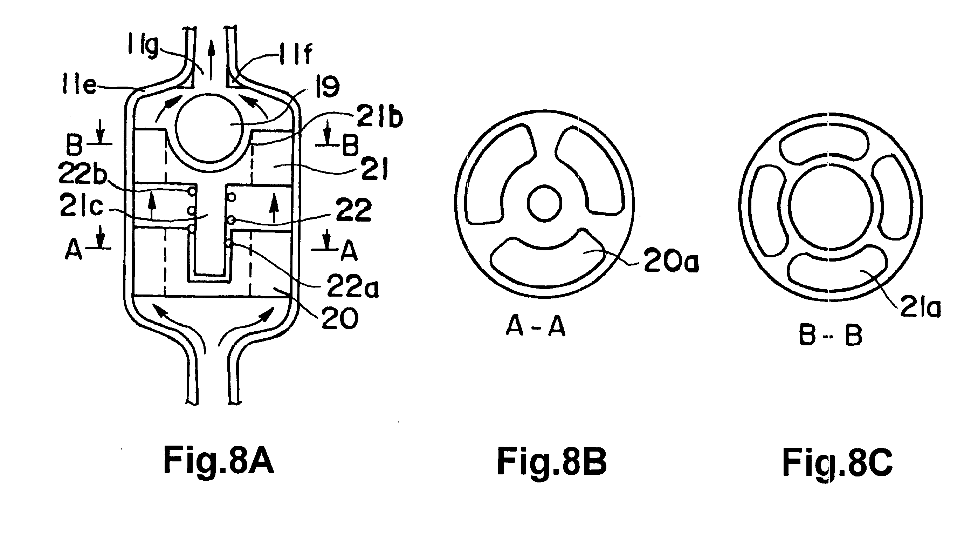

In the first embodiment, the spherical safety valve 19 having a specific gravity larger than water is used, and while the regulating valves 12a and 12b are normally operated, the safety valve 19 returns downward so that when the regulating valve 12a or 12b is closed, the safety valve 19 avoids closing the opening 11g of the valve seat 11f due to its own weight. Meanwhile, as illustrated in FIG. 8, a safety valve 19A for water leakage prevention purposes is formed of a material with a large specific gravity (for example, stainless steel), and a pressing device constituted of a fixing plate 20 including water passage holes 20a (see, FIG. 8B), a pressing plate 21, and springs 22 is used. According to this constitution, only when the regulating valves 12a and 12b continue the opened state for not less than a predetermined time, the opening 11g of the valve seat 11f may be completely closed by the water flow, applied to the pressing plate 21, against the springs 22.

Namely, an upstream end 22a (the lower end in FIG. 8) of the spring 22 is fixed to the fixing plate 20, a shaft portion 21c of the pressing plate 21 is inserted into the spring 22, and a downstream end 22b (the upper end in FIG. 8) of the spring 22 is connected to the lower surface of the pressing plate 21. The pressing plate 21 also includes water passage holes 21a (see, FIG. 8C) at the outer periphery. A semispherical recess 21b is provided at the center of the downstream-side surface (the upstream-side surface in FIG. 8) of the pressing plate 21. The safety valve 19A is in contact with the recess 21b in such a state that the water flow is not applied to the safety valve 19A.

The radius of the safety valve 19A and the shapes of the semispherical recess 21b of the pressing plate 21 and the inner wall of the upper surface of the expansion part 11e are determined so that even when gravity or vibration is applied to the safety valve 19A in the above state, it stays in a space formed between the semispherical recesses 21b and the inner wall of the upper surface of the expansion part 11e.

As described above, while the regulating valves 12a and 12b are normally operated, the safety valve 19A is located in the semispherical recesses 21b by its own weight. The pressing plate 21 receives the intermittent water flow through the water passage holes 20a and repeatedly approaches or separates the safety valve 19A toward or from the valve seat 11f by virtue of the action of the spring 22. However, the safety valve 19A does not close the opening 11g of the valve seat 11f.

However, the regulating valve 12a or 12b may be firmly fixed by water stain, or, for example, due to the abnormality of the power source or the electronic controller, the turning on (the open signal) continues beyond the normal range, whereby the regulating valves 12a and 12b may maintain the full-opened state. In those cases, the pressing plate 21 is moved toward the opening 11g of the valve seat 11f against the restoring force of the spring by the intermittently applied water flow to move the safety valve 19A toward the opening 11g of the valve seat 11f, and, thus, to close the opening 11g of the valve seat 11f.

Thereafter, the closed state is maintained by the water pressure applied to the pressing plate 21, and as in the first embodiment, the jetting of water due to the full-opening abnormality of the regulating valve 12a or 12b can be reliably prevented after a predetermined time.

According to the second embodiment, by virtue of the water flow intermittently applied to the pressing plate 21, the safety valve 19A is moved against the restoring force of the spring 22 to close the opening 11g of the valve seat 11f. Thus, the pressure-sensitive characteristics are determined mainly by the area of the pressure-receiving surface, that is, the area of the pressing plate 21, and the restoring force of a spring 22 (elastic coefficient) (when the safety valve 19A is disposed so as to operate in the vertical direction, the weight, buoyancy, and so on of the safety valve 19A should be added), the expansion part 11e may be disposed in not only the vertical direction but also the horizontal direction.

The safety valve 19A may be integrally combined with the pressing plate 21.

### (Third embodiment)

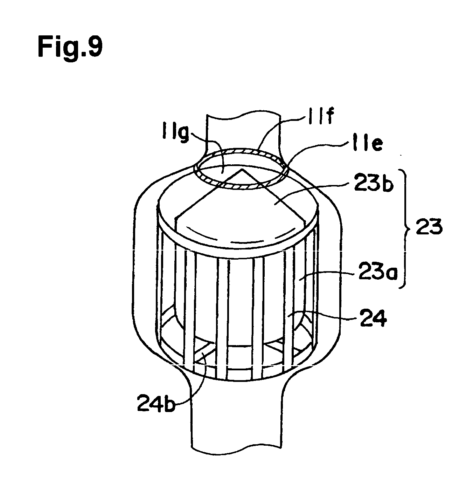

The safety valve for water leakage prevention purposes does not necessarily have a spherical shape. As illustrated in FIG. 9, a safety valve 23 for water leakage prevention purposes is constituted of a cylindrical portion 23a and a conical portion 23b facing the valve seat 11f, and the cylindrical portion 23a may be guided in the axis direction by a guide 24 provided in the water supply pipe 11. The guide 24 on the downstream side of the water flow (the upside in FIG. 9) is attached to the outer periphery of the valve seat 11f provided in the inner surface of the expansion part 11e. The guide 24 has on its side surface a slit or a mesh for ensuring a water flow and has on its bottom surface a stopper 24b for preventing the dropping of the safety valve 23. The cylindrical portion 23a is guided by the guide 24, and the bottom surface of the cylindrical portion 23a receives the water flow. When the regulating valves 12a and 12b are completely opened due to abnormality, the conical portion 23b closes the opening 11g of the valve seat 11f.

According to the above constitution, the safety valve 23 can be smoothly and accurately operated by the guide 24. Further, the diameter of the cylindrical portion 23a is selected, whereby the pressure-receiving surface receiving the water flow can be easily adjusted.

In the first to third embodiments, the expansion part 11e and the safety valve for water leakage prevention purposes are provided on the downstream side of the regulating valves 12a and 12b, but they may be provided on the upstream side.

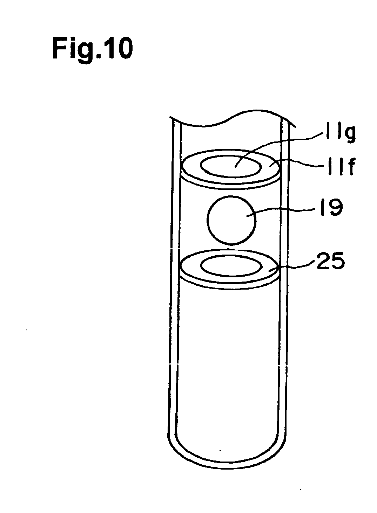

The expansion part 11e is not necessarily provided, as long as the water flow can be ensured. As illustrated in FIG. 10, the diameter of the safety valve 19 is rendered smaller than the diameter of the water supply pipe 11, and the valve seat 11f with a smaller diameter than the diameter of the safety valve 19 and a flange 25 for preventing the dropping of the safety valve 19 are provided in the water supply pipe 11 so that the safety valve 19 may be inserted between the valve seat 11f and the flange 25.

At least a self-lubricating resin is applied onto the surface of the contact part between the safety valve for water leakage prevention purposes and the valve seat 11f, whereby the reliability of the operation can be improved, and, at the same time, the life extension can be realized.

The present invention is applied to a steam oven for an aircraft, whereby when a regulating valve provided in a water supply passage through which water is supplied to a steam generator is firmly fixed by water stain, or when the regulating valve is completely opened by abnormality of a drive mechanism, a power supply system, and a control system, the water supply passage is automatically closed by a safety valve for water leakage prevention purposes that operates when water is continuously supplied for not less than a predetermined time. Consequently, it is possible to reliably prevent water from continuously jetting in a kitchen of an aircraft and leading to water flooding, whereby a highly reliable steam oven for an aircraft can be provided.

## Claims

1. A steam oven for heating in-flight meals, which is provided in an aircraft and includes a regulating valve provided in a water supply pipe for supplying water to a water supply nozzle for steam generation provided in a cook chamber, the regulating valve being driven to be opened and closed by a drive signal of an electronic controller, and the amount of steam generation being controlled by adjusting the frequency of the opening operation based on the drive signal, the steam oven comprising:
a safety valve for water leakage prevention purposes including in the water supply pipe a valve seat having an opening, when the regulating valve is in an opened state, being moved in a direction that closes the opening of the valve seat by a water flow generated in the water supply pipe, and, when the regulating valve is a closed state, being returned in a direction that opens the opening of the valve seat by its own weight or a spring,
wherein the opening of the valve seat is closed by the safety valve only when the regulating valve continues the opened state for not less than a predetermined time, and thereafter, the closing is maintained by the water pressure on the upstream side to prevent jetting of water.

2. The steam oven according to claim 1, wherein the safety valve is a spherical valve, the semispherical portion on the upstream side of the water supply pipe provides a pressure-receiving surface receiving the water flow in the water supply pipe, and the semispherical portion on the downstream side of the water supply pipe is a closing surface closing the opening of the valve seat through a predetermined interval.

3. The steam oven according to claim 1, wherein the water supply pipe comprises an upstream side fixing plate including a water passage hole, a downstream side pressing plate, and a spring connecting these plates, the pressing plate is connected to the fixing plate, fixed to the water supply pipe, through the spring, and only when the regulating valve continues the opened state for not less than a predetermined time, by virtue of the water flow applied to the pressing plate, the pressing plate moves the safety valve against the resorting force of the spring, whereby the opening of the valve seat is closed; thereafter, the closing is maintained by the water pressure on the upstream side to prevent jetting of water.

4. The steam oven according to claim 1, wherein the safety valve comprises a cylindrical portion with the bottom surface facing the upstream side of the water supply pipe and a conical portion integrally formed with the cylindrical portion and facing an opening of a valve seat provided on the downstream side of the water supply pipe, the cylindrical portion is guided in the axis direction by a guide provided in a water supply passage and ensuring a water flow, and only when the regulating valve continues the opened state for not less than a predetermined time, by virtue of the water flow applied to the bottom surface of the cylindrical portion, the opening of the valve seat is closed by the side surface of the conical portion.

5. The steam oven according to claim 1, further comprising an expansion part having the opening of the valve seat, expanding from the opening of the valve seat toward the upstream side of the water supply pipe, and storing the safety valve.

6. The steam oven according to claim 1, wherein at least a self-lubricating resin is applied onto the surface of the contact part between the safety valve and the opening of the valve seat.
